# EUROPEAN PATENT SPECIFICATION

(11) **EP 4 049 471 B1**
(45) Date of publication and mention of the grant of the patent: **04.10.2023**
(21) Application number: 20793398.7
(22) Date of filing: 26.10.2020
(51) Int. Cl.: H04W 4/60, H04W 48/18, H04W 88/06, H04W 8/18

(54) **CHIP, DEVICE AND METHOD FOR MAINTAINING A CONNECTION TO AT LEAST ONE NETWORK**
CHIP, GERÄT UND VERFAHREN ZUR AUFRECHTERHALTUNG EINER VERBINDUNG ZU MINDESTENS EINEM NETZWERK
PUCE, APPAREIL ET PROCÉDÉ PERMETTANT DE MAINTENIR UNE CONNEXION À AU MOINS UN RÉSEAU

(30) Priority: 25.10.2019 EP 19290110
(43) Date of publication of application: 31.08.2022
(73) Proprietor: THALES DIS FRANCE SAS, 92190 Meudon (FR)
(72) Inventor: FINE, Jean-Yves, 13881 GEMENOS CEDEX (FR); CHENE, Gilles, 13881 Gémenos Cedex (FR); BOTUHA, Stéphane, 13881 Gémenos Cedex (FR); DELAGE, Frederic, 13881 Gémenos Cedex (FR); BREUER, Volker, 16727 BOETZOW (DE)
(74) Representative: Thomas, Christine Marie Catherine
(86) International application number: PCT/EP2020/080068
(87) International publication number: WO 2021/079001

(56) References cited:
- US-A1- 2012 027 059
- US-A1- 2013 100 887
- US-A1- 2013 329 639

## Description

### Field of the invention:

The invention relates generally to a chip or a device for maintaining a connection through at least one network to a server.

The invention is notably applicable to a system comprising one or several devices and one or several chips including the aforementioned chip. The device(s) may include an Unmanned Aerial Vehicle (or UAV) (also known as a drone), a vehicle, a mobile device and/or any computing device.

The invention is also applicable to a mobile (radio-communication) field wherein the chip may be either an embedded chip, such as an embedded Universal Integrated Circuit Card (or eUICC) or an integrated Universal Integrated Circuit Card (or iUICC), or a chip included in a Subscribed Identity Module (or SIM) type card or the like, as a Secure Element (or SE).

Within the present description, an SE is a smart object that, on the one hand, protects access to data that the smart object stores and, on the other hand, is intended to communicate with the outside world.

Moreover, the invention pertains to a method for maintaining a connection through at least one network between a device and a server.

### State of the art:

As known per se, a UAV includes a communication module allowing the UAV to exchange, through a mobile (radio-communication) network, such as a 3rd Generation Partnership Project (or 3GPP) network, as a wireless network, with a remote server. The UAV may upload, through the wireless network, to the server, flight data captured at the UAV. The server may control remotely, through the wireless network, the UAV in real time. The UAV has to be under the best possible coverage and signal quality for a wireless connection.

US 9 674 880 B1 describes a technique that determines, based on a signal quality for wireless connections, optimal wireless service carriers and available wireless protocols at a smart vehicle gateway location. The smart vehicle gateway cooperates with a wireless adapter. The wireless adapter selects an International Mobile Subscriber Identity (or IMSI) for one of optimal wireless connections for an electronic or embedded SIM (or eSIM). The eSIM allows switching, between available wireless service carriers, to the selected IMSI, so as to use a corresponding optimal wireless connection.
However, such a known technique is silent about a solution that allows the smart vehicle gateway to maintain a wireless connection. US2012/027059, US2013/100887 and US2013/329639 disclose solutions to enable continuity in similar situations.

There is a need for a solution that allows maintaining a wireless connection, so as not to lose any data exchanged between a device, through a network(s), and a server.

Summary of the invention:The invention proposes a solution for satisfying the just herein above specified need by providing a device for maintaining a connection through at least one network to a server.

According to a first aspect, a device is disclosed in claim 1.

The principle of the invention consists in that, a first (wireless) modem of a device being active and included within a first data path between the device and a server by using a IMSI1 and an associated first IP address, at least a second (wireless) modem being inactive and associated with a IMSI2 and an associated second IP address, the device including the first and second modems and supporting a modem manager, the modem manager is adapted to:
- receive, from each of the (two or more) modems, a measurement of a Quality of Service (or QoS);
- identify, based on the (received) first and second QoS measurements, the best one or the one to become the best one; then,
- only if the second QoS measurement is the best one or the one to become the best one,
   - activate the second modem using the IMSI2;
   - transmit, to the server, once the second modem is active, the second IP address, as a currently active IP address of the device, and a first IP address, as a previously active IP address of the device;
   - route data from the first to the second modem;
   - de-activate the first modem.

At an initial state, the device has a wireless connection, through the first modem that is active and uses the IMSI1, through a first mobile network that is selected for the data path with the server.

Once the modem manager has switched the data path from the first to the second modem that is newly active, the device keeps the wireless connection, through the second modem using the IMSI2, through a second mobile network that is newly selected for the data path with the server.

The invention solution does not need to coordinate the mobile network operators.

The invention solution allows thus maintaining automatically a wireless connection, through the second modem which the modem manager has switched to, between the device and the server.

Once the second modem is activated, data that has to be sent to the server from the device is sent, instead of using the data path through the first modem that is newly inactive, by using a data path through the second modem.

Once the second modem is activated, data that has to be received from the server by the device is received, instead of using the data path through the first modem, by using the data path through the second modem.

Once the first modem is deactivated, only the second modem remains active.

Due to an automatic processing of the switch of a data path from the first to the second modem, the invention solution requires no human intervention to maintain a wireless connection between the invention device and the server.

The invention solution is therefore user friendly.

Contrary to the known aforementioned solution, due to a permanent wireless connection, over the invention device, to a first and then a second mobile network, there is no network connectivity loss issue and therefore no data loss between the device and the server.

The invention solution allows the server to be always informed about the active IP address of the device.

According to a further aspect, a chip is disclosed in claim 6.

The invention does not impose any constraint as to a kind of the chip, as an SE, that may be either embedded, integrated, as a chip soldered, possibly in a removable manner, on a Printed Circuit Board (or PCB) of a (chip host) device, a Trusted Execution Environment (or TEE), as a secure area of a terminal processor and a secured runtime environment, or removable from a (chip host) device.

The SE may thus have different form factors.

As removable from the device, the SE includes a SIM type card, a Secure Removable Module (or SRM), a smart dongle of the USB (acronym for "Universal Serial Bus") type, a (micro-) Secure Digital (or SD) type card or a Multi-Media type Card (or MMC) or any medium that carries the chip to be coupled, through a contact and/or a contact-less link, to an (SE host) device.

The adjective "contact-less" means that the SE and the device that cooperates with the chip are connected to or include means for communicating data while using preferably a Short Range (or SR) Radio-Frequency (or RF) link. The SR RF link may be related to any technology that allows the SE to exchange data with the device. The SR RF may be fixed at 13,56 MHz and related to a Near Field Communication (or NFC) type technology or the like, as a contact-less technology.

According to a further aspect, a method is disclosed in claim 9.

### Brief description of the drawings:

Additional features and advantages of the invention will be more clearly understandable after reading a detailed description of one preferred embodiment of the invention, given as an indicative and non-limitative example, in conjunction with the following drawings:

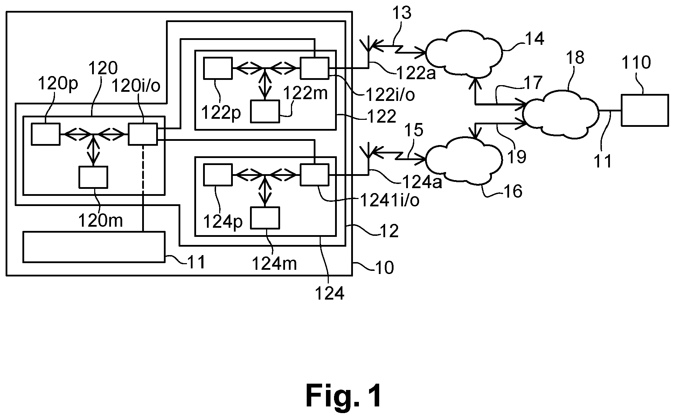

- Figure 1 illustrates a simplified diagram of a server and a system comprising a drone and a chip cooperating with the drone, the chip including a first and a second modem, the chip being internally arranged to constantly provide the drone with the best (or to become the best) wireless connection, through the first or second modem, via a corresponding first or second mobile network respectively, to the server, according to the invention; and

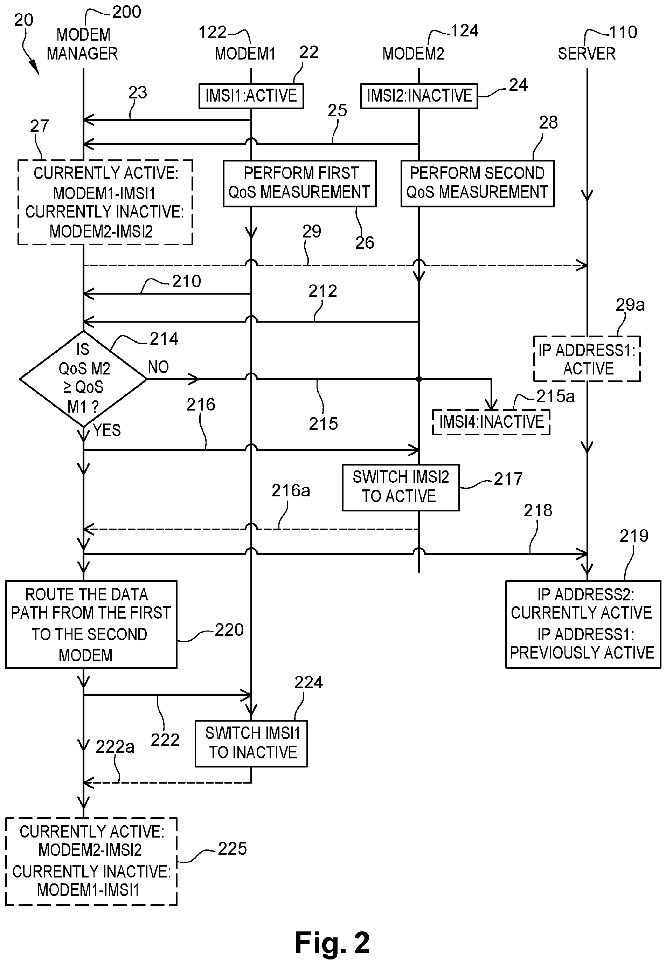

- Figure 2 represents an example of one message flow between the different chip components and the server of figure 1, so that a modem manager controls, based on the best (or to become the best) received QoS measurement, a data path, over the second mobile network, with the server by using, after a second modem activation, a modem switch and a first modem deactivation, only the second modem.

### Detailed description:

Herein under is considered a case in which the invention method for maintaining a connection through at least one network between a device and a server is implemented by a system including a drone and a chip that is comprised in the drone, as a (chip host) device.

Naturally, the herein below described embodiment is only for exemplifying purposes and is not considered to reduce the scope of the invention.

**Figure 1** shows schematically a system 100 for maintaining a connection through a network(s), namely a first (mobile radio communication) network 14 or a second (mobile radio communication) network 16 and an Internet type network 18, between a drone 10, as a device, and a (remote) server 110.

The system 100 includes a drone 10, as a terminal and a (chip host) device, and e.g., an eUICC, as a chip 12.

Instead of being constituted by a drone, the device includes a vehicle, a set-up box, a desktop computer, a laptop computer, a Personal Computer (or PC), a media-player, a game console, a tablet, a netbook, a mobile phone, a handset, a Personal Digital Assistance (or PDA), a Machine To Machine (or M2M) and an Internet of Things (or loT).

Such a device set is not exhaustive but only for exemplifying purposes.

Instead of a drone, the device may include any other computing device including means for processing data, comprising (or being connected to) wireless communication means for exchanging data with outside, and comprising (or being connected to) means for storing data.

Within the present description, the adjective "wireless" used within the expression "wireless communication means" denotes notably that the communication means communicates via one or several Long Range (or LR) RF links.

The LR RF may be fixed at several hundreds or thousands of MHz, like e.g., around 850, 900, 1800, 1900 and/or 2100 MHz.

The system 100 may include, besides the drone 10 and the chip 12, a mobile phone, as (an)other device(s), and/or (an)other chip(s).

The system 100 is initially connected, through the first mobile network 14, to the server 110.

Only one system is represented for clarity reason. However, the server 110 may be able to remotely control the flight of a fleet of drones/chips without being disconnected from each drone/chip.

The first 14 and 16 second networks, also termed cellular networks, and may be, each, constituted by a (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a Code Division Multiple Access (or CDMA), a WLAN (acronym for "Wide Local Area Network"), a Long Term Evolution (or LTE), and/or a 5G (also termed NR (acronym for "New Radio")) type network(s).

Such a cellular network set is not exhaustive but only for exemplifying purposes.

The first network 14 is connected, through a bi-directional first wire (or wireless) link 17, to the Internet 18.

The second network 16 is connected, through a bi-directional second wire (or wireless) link 19, to the Internet 18.

The server 110 is connected, through a bi-directional third wire (or wireless) link 111, to the Internet 18.

The drone 10, as an aircraft without any human pilot inside, is able to fly.

To fly, the drone 10 is preferably piloted by or through the server 110 from another entity, such as a remote PC. Such a remote piloting implies to remain, during the flight, connected, through the first 14 or second 16 mobile network, to or through the server 110.

The drone 10 has a body (not represented).

The drone body is provided with one or several rotors (not represented). Each rotor allows rotating preferably one or several blades coupled to the rotor.

The drone body carries preferably one or several cameras (not represented), so as to capture one or several images and/or one or several videos from a drone 10 environment. Such captured data is preferably sent by the drone 10, through the chip 12, to or though the server 110. The captured data may provide information that is taken into account to remotely pilot or guide the drone 10.

The drone 10 includes preferably a PCB in the drone body.

The PCB includes one or several electric motors that is(are) coupled to the rotor(s), so as to spin the thus coupled rotor(s).

The PCB comprises a navigation module 11 and the chip 12, as a wireless communication module. The chip 12 is communicatively coupled to the navigation module 11. The chip 12 is under control of the navigation module 11. The navigation module 11 is under control of a connected entity, such as the server 110.

The chip 12, as wireless communication means, manages wireless communication functions in cooperation preferably with one or several antennas for communicating, Over-The-Air (or OTA), with (an)other external entity(ies), such as the server 110.

The chip 12 is preferably used for accessing two (or more) different (i.e. uncoupled) mobile networks, namely the first 14 and second 16 mobile networks, as two (or more) different Public Land Mobile Networks(or PLMNs).

As known per se, a PLMN is a combination of wireless (communication) services offered by a specific operator in a specific country. The PLMN typically consists of several (cellular) technologies, like e.g., Global Service for Mobiles (or GSM)/2G, UMTS/3G or LTE/4G, offered by a single operator within a given country. The PLMN offers to a mobile subscriber the following services: Emergency calls to local fire/ambulance/police, voice calls, Short Message Service (or SMS) services, Multimedia Messaging Service (or MMS) services, Unstructured Supplementary Service Data (or USSD) for operator specific interactions and Internet data connectivity. The service quality strongly depends on the technology used to implement a PLMN.

The chip 12 and/or the drone 10 comprises a Master Control Unit (or MCU) 120. The MCU 120 comprises a (micro)processor 120p, as data processing means, one or several memories 120m, as data storing means, and Input/Output (or I/O) interfaces 120i/o that are linked all together through a control and data bus. The I/O interfaces 120i/o allow the MCU 120 to exchange notably with other internal components.

The chip 12 comprises or is connected to a plurality of (baseband) (wireless) modems 122 and 124. Only two modems 122 and 124 are represented for clarity reason. However, the chip 12 or the drone 10 may be able to manage more than two modems, so as to maintain a wireless connection.

The MCU memory(ies) 120m stores an Operating System (or OS) and one or several applications.

The MCU 120, and more exactly its I/O interfaces 120i/o, is connected, on one hand, through a first bi-directional link 121, to a first modem 122 and, on another hand, through a second bi-directional link 123, to a second modem 124.

The first 122 and second 124 modems are preferably identical to each other as to their HardWare (or HW) and Software (or SW) components.

Each of the first 122 and second 124 modems comprises a (micro)processor(s) 122p or 124p, as data processing means, one or several memories 122m or 124m, as data storing means, and two (or more) I/O interfaces 122i/o or 124 i/o that are linked all together through a control and data bus. The first 122 and second 124 modem I/O interfaces 122i/o or 124 i/o allow their respective first 122 or second 124 modem to exchange data notably, on one hand, with the MCU 120, and, on another hand, with their respective antenna 122a or 124a.

Each of the first 122 and second 124 modems provides access to one or several wireless networks, like e.g., a 3GPP wireless network(s), such as e.g., a 3Generation (or 3G), 4G, 5G or any other future evolution(s).

Each of the first 122 and second 124 modems plays a role of a modulator-demodulator, so as to exchange data with the corresponding first 14 or second 16 mobile network respectively.

More exactly, each of the first 122 and second 124 modems carries out the following operations:
- a modulation of an analogical carrier signal to encode digital information to be transmitted by a transmitter, over a corresponding first 122a or second 124a antenna, to (an)other entity(ies), such as the server 110; and
- a demodulation of a received analogical carrier signal to decode encoded digital information that is received by a receiver, over the corresponding first 122a or second 124a antenna, from (an)other entity(ies), such as the server 110.

Each of the first 122a (modem) and second 124a antennas allows communicating data, through a corresponding bi-directional LR RF link(s) 13 or 15, to or through the corresponding first 14 or second 16 mobile network (respectively), possibly to the server 110.

Each of the first 122m and second 124m modem memory(ies) store(s) preferably one or several Subscriber Identity Module (or SIM) type applications.

The first modem 122 stores, in its data storing means 122m, a first predefined (i.e. pre-provisioned) Uniform Resource Identifier (or URI), URI1, a first predefined (i.e. pre-provisioned) Uniform Resource Locator (or URL), URL1, and/or a first predefined (i.e. pre-provisioned) Internet Protocol (or IP) address, IP address 1, as a first identifier(s) of the chip 12 and the drone 10. The first chip/drone identifier(s), namely the URI1, URL1 and/or IP address 1, is(are) usable to address the chip 12/drone 10 only when the chip 12/drone 10 is connected, through the first modem 122, to the first network 14. The first chip/drone identifier(s) is(are) associated with an IMSIi. The IMSIi is different from any other IMSIi of the same first subscription set.

The second modem 124 stores, in its data storing means 124m, a second predefined URI, URI2, a second predefined URL, URL2, and/or a second predefined IP address, IP address 2, as a second identifier(s) of the chip 12 and the drone 10. The second chip identifier(s), namely the URI2, URL2 and/or IP address 2, is(are) usable to address the chip 12/the drone 10 only when the chip 12/the drone 10 is connected, through the second modem 124, to the second network 16. The second chip/drone identifier(s) is(are) associated with the IMSIj. The IMSIj is different from any other IMSIj of the same second subscription set.

The SIM type application(s) includes a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The first 122 and second 124 modems are preferably different from each other as to data the first modem 122 and the second modem 124 store and use.

Each of the SIM type application(s) allow(s) the chip 12/the drone 10 to authenticate to the first 14 or second 16 network by using preferably a network authentication key Ki relating to a corresponding active IMSIi or IMSIj.

The first modem 122 stores, in its data storing means 122m, one or several (service) predefined (i.e. pre-provisioned) subscription (profiles) of all of the first network(s) in a predetermined usage area, as a first subscription (profile) set or IMSIi. The IMSIi includes at least a first subscription or IMSI1 to the first mobile network 14. Each IMSli allows the first modem 122 to establish a (wireless) connection to the first mobile network 14.

The second modem 124 stores, in its data storing means 124m, one or several predefined (i.e. pre-provisioned) subscription (profiles) of all of the second network(s) in the usage area, as a second subscription (profile) set or IMSIj. The IMSIj includes at least a second subscription or IMSI2 to the second mobile network 16. The IMSIj is different from any other IMSIj of the same second subscription set. Each IMSIj allows the second modem 124 to establish a (wireless) connection to the second mobile network 16.

Each subscription to the first 14 or second 16 mobile network includes, as a subscription profile, one or several elements of a group including:
- an IMSI or the like, as a subscriber and a service subscription identifier for accessing the first 14 or second 16 mobile network;
- a key Ki or the like, as a network authentication key, allowing to authenticate the concerned subscriber to the concerned first 14 or second 16 mobile network;
- Milenage, as an authentication algorithm, allowing to authenticate the concerned subscriber to the concerned first 14 or second 16 mobile network;
- one or several passwords, like e.g., a Personal Identity Number (or PIN), and/or one or several cryptographic algorithms, as a secret(s) that is(are) securely stored in the first 122 or second 124 modem;
- a file system including one or several Elementary Files (or EF);
- one or several security keys, like e.g., a key(s) for encrypting/decrypting data and/or a key(s) for signing data;
- one or several applicative keys, like e.g., a key(s) for accessing a user bank account through the first 14 or second 16 mobile network; and/or
- one or several credentials, like e.g., an IDentifier (or ID) of the subscriber, as data relating to the subscriber.

As known per se, each IMSI includes a PLMN code that identifies a corresponding PLMN. The PLMN code includes a Mobile Country Code (or MCC) that identifies a country and a Mobile Network Code (or MNC) that identifies a Mobile Network Operator (or MNO). Each IMSI allows identifying a subscriber to a concerned Mobile Network.

The IMSlj is(are) preferably different from the IMSli.

The IMSli is(are) specific to the first mobile network 14 and a first MNO or a first set of MNOs, as MNO1(s).

The IMSlj is(are) specific to the second mobile network 16 and a second MNO or a second set of MNOs, as MNO2(s). The MNO2(s) is(are) preferably different from the MNO1(s).

The MNO1(s) operate(s) or let(s) operate the first network 14.

The MNO2(s) operate(s) or let(s) operate the second network 16.

Each of the first 122 and second 124 modems monitors one or several wireless protocol stacks.

Each of the first 122 and second 124 modems has one or several active modes and one or several inactive modes, such as an idle mode(s).

The first modem 122 is initially, e.g., in an active mode (i.e. in a connected mode), and uses e.g., the IMSI1 while the second modem 124 is initially, e.g., in an inactive mode (i.e. in a non-connected mode), and associated with the IMSI2.

In either an active or an inactive mode, the first 122 or second 124 modem is able to carry out a continuous scan, by using its transmitter and/or its receiver, to perform one or several predefined first or second QoS measurement(s). To carry out such a first or second QoS measurement(s), the concerned first 122 or second 124 modem attaches to the concerned respective first 14 or second 16 network and tests the connectivity to the concerned first 14 or 16 second mobile network. The concerned first 122 or second 124 modem provides the resulting respective first or second QoS measurement(s), as a Key Performance Indicator(s) (or KPI).

Each of the first and second QoS measurement(s) includes one or several elements of a group including:
- a Received Signal Strength Indication (or RSSI);
- a Received Signal Code Power (or RSCP);
- a Reference Signal Received Quality (or RSRQ);
- a latency;
- a bandwidth;
- a Signal-to-Noise Ratio (or SNR);
- a Bit Error Rate (or BER); and
- a Block Error Rate (or BLER).

In the active mode, the concerned first 122 (or second 124) modem provides the MCU 120 and the drone 10 with a data path that uses a corresponding IMSI1 (or IMSI2 respectively).

In the active mode, the concerned first 122 (or second 124) modem uses at least a corresponding IMSI1 (or IMSI2 respectively) while, in the inactive mode, the concerned first 122 (or second 124) modem does not use any corresponding IMSI1 (or IMSI2 respectively).

The first modem 122, and more exactly its processor 122p, that is initially in an active mode, manages initially a data path with, i.e. from/to, outside.

The chip 12 or the drone 10 comprises a modem manager, as an invention application supported by the chip 12 or the device 10 respectively.

Only one active mode and only one inactive mode are used for clarity reason. However, the modem manager may be able to manage several active modes and several inactive modes for each of the first 122 and second 124 modems.

The modem manager is preferably supported by the MCU 120. The MCU processor 120p is able to execute the modem manager.

Alternatively, the modem manager is supported by the first 122 or the second 124 modem. The first 122p or the second 124p modem processor is able to execute the modem manager.

The modem manager is arranged to receive, from the first modem 122, a predefined first QoS measurement on a used IMSI1.

The modem manager is also arranged to receive, from the second modem 124, a predefined second QoS measurement that is indicative on a second subscription IMSI2.

The modem manager is adapted to determine, based on the first and second QoS measurements, the best (or to become the best) QoS measurement.

The modem manager is configured to send, to the second modem 124, only if the second QoS measurement is greater than (or equal to) the first QoS measurement, a command for switching from the inactive mode to the active mode. The second modem 124 switches from the inactive to the active mode by executing the received command for switching from the inactive to the active mode. When switching to the active mode, the second modem 124 uses the second subscription IMSI2.

Each of the first 122 and second 124 modems stores, in its data storing means 122m and 124m respectively, a third predefined URI, URI3, a third predefined URL, URL3, and/or a third predefined IP address, IP address 3, as an identifier(s) of the server 110.

The modem manager is configured to send, once the second modem 124 has switched to the active mode, to the server 110, e.g., the IP address 2, as the second chip identifier(s) and the currently active identifier(s) of the chip 12, and e.g., the IP address 1, as the first chip identifier(s) and the previously active identifier(s) of the chip 12. To send to the server 110 the second chip identifier(s) and the first chip identifier(s), the modem manager uses one or several server identifier(s), such as the IP address 3.

According to the invention, the modem manager is adapted to route, only if the second QoS measurement is greater than (or equal to) the first QoS measurement, the data path from the first 122 to the second 124 modem. In other words, the modem manager allows configuring and maintaining a data connection through the best (or to become the best) available wireless network by selecting the first 122 or second 124 modem that presents the best (or to become the best) QoS measurement.

The modem manager is configured to send, to the first modem 122, only if the second QoS measurement is greater than (or equal to) the first QoS measurement, a command for switching from the active to the inactive mode. The first modem 122 switches from the active to the inactive mode by executing the received command for switching from the active to the inactive mode. When switching to the inactive mode, the first modem 122 does no longer use the first subscription IMSI1.

The IMSI2 replaces or substitutes the IMSI1 at the chip 12/drone 10 level.

The modem manager allows thus ensuring that the first 122 and second 124 modems operate in different modes prior to and after firstly a second modem mode switch and secondly a first modem mode switch.

Prior to such a double (namely the first and the second) modem mode switch, only one modem, namely the first modem 122, is active and the other modem(s), namely the second 124 modem, is(are) inactive. During the double modem mode switch, after a second modem 124 activation and prior to a first modem deactivation, the first 122 and second 124 modems are both active, in a temporary and transitory manner, at the same time. After the double modem mode switch, only one modem, namely the second modem 124, is active and the other modem(s), namely the first modem 122, is(are) inactive.

The modem manager allows managing, on one hand, a switch from the first 122 to the second 124 modem (or reversely) in an active mode, on another hand, in the quasi-same time, a switch from the IMSI1 to the IMSI2, as the active subscription.

The modem manager allows thus ensuring a data network connectivity after such a double modem switch without involving the terminal user.

The server 110 is identified by the URI3, the URL3 and/or the IP address 3, as the server identifier(s).

The server 110 may be operated by a service provider or on its behalf.

The server 110 is hosted by a computer.

The server 110 controls remotely the devices/chips, as systems.

According to a particular embodiment, the server 110 is dedicated to running an application for piloting a fleet of drones/chips, as systems.

The server 110 includes or accesses a memory(ies) (not represented) that store(s) a database. The database registers data to each of the drones/chips, as clients to be managed.

The database contains a set of one or several identifiers relating, each, to an individual client that is, each, preferably associated with a currently active identifier(s) of the client and preferably a previously active identifier(s) of the client, when applicable.

For sake of simplicity, the represented database registers data relating to only one client, namely the drone10/the chip 12 (not represented), that is associated, just before a new routing at the client side, with e.g., the URL2, as a currently active identifier(s) of the client, and e.g., the URL1, a previously active identifier(s) of the client.

**Figure 2** depicts an exemplary embodiment of a message flow 20 that involves the modem manager 200, the first modem 122, the second modem 124 and the server 110.

In the explained example, initially, the first modem 122 is in an active mode and uses IMSI1, as the active subscription 22, while the second modem 124 is in an inactive mode and does not use IMSI2, as the inactive subscription 24.

Optionally, once the first modem 122 has activated the IMSI1 upon a modem manager request (not represented), the first modem 122 sends 23, to the modem manager, a message including that the IMSI1 is currently active, i.e. the IMSI1 is enabled, as a current IMSI1 state at the first modem 122.

Optionally, once the second modem 124 has deactivated the IMSI2 upon a modem manager request (not represented), the second modem 124 sends 25, to the modem manager, a message including that the IMSI2 is currently inactive, i.e. the IMSI2 is disabled, as a current IMSI2 state at the second modem 124.

Optionally, the modem manager 200 registers 27 that, currently, the first modem 122 and the IMSI1 are both active while the second modem 124 and the IMSI2 are both inactive, as current states of the first 122 and second 124 modems and current states of the associated IMSI1 and IMSI2 respectively. Optionally, the modem manager 200 registers (not represented) that the chip 12 is associated with the IP address 1, as the IP address that is associated with the currently active subscription, namely IMSI1 at the chip level. The IP address 1 allows an external entity, such as the server 110, to address the chip 12.

Optionally, the modem manager 200 sends 29, to the server 110, a message including that the IP address 1 is the currently active IP address and that is associated with the IMSI1, as the currently active subscription at the chip and client level.

The server 110 registers 29a, in its database, based on the received message, that the chip 12, as a client, is associated with the IP address 1, as the currently active IP address that is associated with the currently active subscription, namely IMSI1 at the chip and client level.

Initially, the first modem 122 is included in a first data path between the chip12/drone 10 and the server 110.

It is further assumed that modem manager 200 has previously requested (not represented) each of the first 122 and second 124 modems to carry out a QoS measurement.

The first modem 122 carries out 26 or performs a first QoS measurement on the used IMSI1.

The second modem 124 carries out 28 or performs a second QoS measurement. The second QoS measurement is indicative, i.e. represents, the QoS measurement on the IMSI2 without using the IMSI2 since the IMSI2 is inactive.

The first modem 122 sends 210, to the modem manager, the (performed) first QoS measurement on the used IMSI1.

The first modem 122 manages a data path with, i.e. from/to, outside. The chip 12 has therefore a data path that uses, at the chip and client level, the (currently selected) first modem 122, externally (i.e. outside the client) the corresponding first network 14, and preferably (but not mandatorily) the Internet 18 and the server 110.

The second modem 124 sends 212, to the modem manager, the (performed) second QoS measurement indicative on the IMSI2.

Once the modem manager 200 has received the first and second QoS measurements, the modem manager 200 compares the second QoS measurement to the first QoS measurement.

The modem manager 200 verifies 214 whether the second QoS measurement is or is not greater than (or equal to) the first QoS measurement. In other words, the modem manager 200 determines, based on the (received) first and second QoS measurements, the best QoS measurement (or the one to become the best QoS measurement).

If the first QoS measurement is greater than the second QoS measurement, the modem manager 200 may send 215, to the second modem 124, a command for switching to an IMSI4, as a fourth subscription (different from any IMSli and any other IMSIj) and an inactive subscription. Once the second modem 124 has received the command for switching to an IMSI4, the second modem 124 switches from the IMSI2 to the IMSI4. Optionally, once the second modem 124 has switched to the IMSI4, the second modem 124 sends (not represented), to the modem manager, a message including that the IMSI4 is currently inactive, i.e. the IMSI4 is disabled, as a current IMSI state at the second modem 124. The modem manager 200 requests to the second modem 124 to carry out a fourth QoS measurement. The fourth QoS measurement is indicative, i.e. represents, the QoS measurement without using the IMSI4 since the IMSI4 is inactive at the second modem 124.

Only if the second QoS measurement is greater than (or equal to) the first QoS measurement, the modem manager 200 sends 216, to the second modem 124, a command for switching from the inactive to the active mode. In other words, the modem manager 200 requests to activate the second modem 124 (i.e. to make the second modem effective) by passing the IMSI2 from the disabled to the enabled state, as the currently active subscription at the second modem 124. Once the second modem 124 has received the command for switching from the inactive to the active mode, the second modem 124 switches 217 from the inactive mode to the active mode by passing the IMSI2 from the inactive to the active state. Optionally, once the second modem 124 has activated the IMSI2, the second modem 124 sends 216a, to the modem manager 200, a message including that the IMSI2 is currently active, i.e. the IMSI2 is enabled, as a currently active subscription at the second modem 124.

Just after such a second modem 124 activation and such an IMSI2 activation, there are, in a temporary manner, the first modem 122 and the second modem 124 that are both active and the IMSI1 and the IMSI2 that are both active at the same time.

Optionally, once the IMSI2 has been activated by the second modem 124 and prior to switching the data path from the first 122 to the second 124 modem, the modem manager 200 sends 218, to the server 110, a message, such as an SMS type message, including, preferably in a data part, the IP address 2, as the currently active IP address of the chip 12, and the IP address 1, as the previously active IP address of the chip 12. Alternatively, instead of sending the IP address 2 and the IP address 1, the modem manager 200 sends (not represented), to the server 110, a message, such as an SMS type message, including, preferably in a data part, the IP address 2, as the currently active IP address of the chip 12, in association with a Temporary IMSI2, as T-IMSI2 (or the like), and the IP address 1, in association with a Temporary IMSI1, as T-IMSI1 (or the like) as the previously active IP address of the chip 12. The T-IMSI2 and the T-IMSI1 are related to IMSI2 and IMSI1 respectively and allow the server 110 to associate correctly and securely (as the IMSI2 and the IMSI1 are not communicated) the IP address 2 and the IP address 1 to its respective IMSI2 and IMSI1.

The modem manager 200 thus advises the server 110 of a change of an IP address to be used to access the chip 12, so as to exchange continuously with the chip 12 (i.e. without being disconnected from the chip 12). The IP address 2 is associated with the IMSI2, as the currently active subscription at the second modem 124.

Optionally, the server 110 registers 219, in its database, that the chip 12/drone 10, as a client, is associated with, on one hand, the IP address 2, as the currently active IP address of the chip 12/drone 10 that is associated with the currently active subscription, namely IMSI2 at the chip and client level and, on another hand, the IP address 1, as the (very shortly) previously active IP address of the chip 12/drone 10 that is associated with the (very shortly) inactive subscription, namely IMSI1 at the chip and client level. The server 110 maintains thus an up-to-date history of the IP address of the chip 12/drone 10 to be used to communicate with the chip 12/drone 10.

Optionally, once the IMSI2 has been activated by the second modem 124 and prior to switching the data path from the first 122 to the second 124 modem, the modem manager 200 registers (not represented) the first modem 122, as the previously active modem, preferably in association with the IMSI1, as the previously active subscription.

Only if the second QoS measurement is greater than (or equal to) the first QoS measurement, the modem manager 200 routes 220 from the first 122 to the second 124 modem. To route from the first 122 to the second 124 modem, the modem manager 200 selects within the chip 12, instead of the first modem 122, the second modem 124. Thus, the second modem 124 (newly) manages the data path with, i.e. from/to, outside. The chip 12 has therefore the data path that uses, at the chip and client level, the (currently selected) second modem 124, externally (i.e. outside the client) the corresponding second network 16, and preferably (but not mandatorily) the Internet 18 and the server 110.

Only if the second QoS measurement is greater than (or equal to) the first QoS measurement and preferably once the second modem has been (successfully) activated, the modem manager 200 sends 222, to the first modem 122, a command for switching from the active to the inactive mode. In other words, the modem manager 200 requests to deactivate the first modem 122 (i.e. to make the first modem ineffective while being able to carry out one or several QoS measurements). Once the first modem 122 has received the command for switching from the active to the inactive mode, the first modem 122 switches 223 from the active mode to the inactive mode by passing (or switching) the IMSI1 from the active state to the inactive state. Optionally, once the first modem 122 has deactivated the IMSI1, the first modem 122 sends 222a, to the modem manager 200, a message including that the IMSI1 is currently inactive, i.e. the IMSI1 is disabled, as a currently inactive subscription at the first modem 122.

Only if the second QoS measurement is greater than (or equal to) the first QoS measurement and preferably once the second modem has been (successfully) activated, the modem manager 200 may send (not represented), to the first modem 122, a command for switching to an IMSI3, as a third subscription (different from any IMSIj and any other IMSli) and an inactive subscription. Once the first modem 122 has received the command for switching to an IMSI3, the first modem 122 switches from the IMSI1 to the IMSI3. Optionally, once the first modem 122 has switched to the IMSI3, the first modem 122 sends (not represented), to the modem manager 200, a message including that the IMSI3 is currently inactive, i.e. the IMSI3 is disabled, as a current IMSI state at the first modem 122. The modem manager 200 requests to the first modem 122 to carry out a third QoS measurement. The third QoS measurement is indicative, i.e. represents, the QoS measurement without using the IMSI3 since the IMSI3 is inactive at the first modem 122.

The second modem 124 that becomes solely active takes the role of the first modem 122, as the previously active modem at the chip level.

The second modem 124 is thus included in a second data path between the chip12/drone 10 and the server 110.

The modem manager 200 may request the second modem 124 to carry out an additional second QoS measurement.

Optionally, the modem manager 200 registers 225 that, currently, the second modem 124 and the IMSI2 are both active while the first modem 122 and the IMSI1 are both inactive, as current states of the second 124 and first 122 modems and current states of the associated IMSI2 and IMSI1 respectively. Optionally, the modem manager 200 registers (not represented) that the chip 12/drone 10 is associated with the IP address 2, as the IP address that is associated with the currently active subscription, namely IMSI2 at the chip level. The IP address 2 allows an external entity, such as the server 110, to address the chip 12/drone 10.

Thus, the configuration of the chip 12 allows the drone 10 to access, after a modem switch within the chip 12, the second network 16 and preferably the server 110.

The chip 12 is still (i.e. after the modem switch) able to send data, such as data captured at the drone 10 or client level, possibly in an encrypted manner while using a secret shared with the server 110, to the server 110.

Likewise, the server 110 is still (i.e. after the modem switch) able to send data, such as data allowing to pilot or manage the drone 10, possibly in an encrypted manner while using a secret shared with the chip 12, to the chip 12/drone 10.

The chip 12/drone 10 are thus still able to communicate mutually in a protect manner, i.e., in an encrypted manner, even after the chip12/drone 10 has changed its IP address.

The second modem 124 remains solely active until a next modem switch, when applicable, i.e. until the first modem 122 sends to the modem manager 200 another first QoS measurement that is greater than (or equal to) another second QoS measurement.

Optionally, if the modem manager 200 observes a sudden wireless data connection loss or the like, then the modem manager 200 switches back (not represented) to the registered previously active modem, namely the first modem 122, in association with the previously active subscription, namely the IMSI1. To switch back, the modem manager 200 sends (not represented), to the first modem 122, a command for switching from the inactive to the active mode. Then, the modem manager 200 routes (not represented) the data path from the second 124 to the first 122 modem. The IMSI1 substitutes the IMSI2 at the chip 12 level. At last, the modem manager 200 sends (not represented), to the second modem 124, a command for switching from the active to the inactive mode. Such a modem switch back may allow to retrieve quickly a wireless data connection.

The server 110 tracks with the time the active chip 12/drone 10 identifier(s), such as the IP address, while being able to exchange data with the chip 12/drone 10 and therefore remains permanently wirelessly connected to the chip12/client 100.

The server 110 is thus kept updated on any change of the chip 12/drone 10 identifier(s), so as to communicate with the chip 12/drone 10.

Instead of exchanging data by using an HyperText Transfer Protocol (or HTTP) type protocol or HyperText Transfer Protocol Secure (or HTTPS) type protocol, the server 110 and the chip 12 may exchange data by using an SMS type message(s).

The invention solution allows changing, at the chip level, after a modem switch at the modem manager (or chip) level, to a newly active modem and an associated newly active subscription without interrupting the data connection.

The invention solution allows providing continuity of wireless connection between a chip/device and a server.

The server is thus able to track continuously the chip/device under control.

The invention solution is automatically executed and is therefore transparent to the user.

The embodiment that has just been described is not intended to limit the scope of the concerned invention. Other embodiments may be given. As another embodiment example, instead of exchanging with a remote server, the modem manager exchanges, over a wireless connection, possibly through the remote server, with another entity, like e.g., a user terminal, such as a mobile phone (not represented).

## Claims

1. A device (10) for maintaining a connection through at least one wireless network (14 or 16) to a server (110), the device comprising a first modem (122) and at least one second modem (124), each of the first modem and the at least one second modem comprising data storing means (122m or 124m), each of the data storing means storing at least one International Mobile Subscriber Identity, IMSI, each of the first modem and the at least one second modem having an active mode and an inactive mode, the first modem being initially in the active mode and being included in a first data path between the device and the server, the at least one second modem being initially in the inactive mode, the device comprising a modem manager (200), the modem manager is configured to:
- receive (210), from the first modem, a first service quality measurement on a used IMSI1, the IMSI1 being associated with a first IP address;
- receive (212), from the at least one second modem, at least one second service quality measurement being indicative on a IMSI2, the IMSI2 being associated with a second IP address;
- determine (214), based on the at least one second service quality measurement and the first service quality measurement, the best service quality measurement;
- send (216), to the second modem, only if the second service quality measurement is greater than or equal to the first service quality measurement, a command for switching from the inactive mode to the active mode;
- send (218), to the server, once the second modem has switched to the active mode, a message including the second IP address, as a currently active IP address of the device, and the first IP address, as a previously active IP address of the device;
- route (220), only if the second service quality measurement is greater than or equal to the first service quality measurement, data from the first to the second modem, the IMSI2 substituting the IMSI1 at the device, the second modem being included in a second data path between the device and the server; and
- send (222), to the first modem, only if the second service quality measurement is greater than or equal to the first service quality measurement, a command for switching from the active mode to the inactive mode,
said device storing secret shared with the server, the modem manager is further configured to send, to the server, data in an encrypted manner while using the shared secret and/or to receive from the server data in an encrypted manner while using the shared secret.

2. Device according to claim 1, wherein the modem manager is further configured to send, once the second modem has been activated, to the first modem, a command for switching from the IMSI1 to a IMSI3 and carrying out at least one third service quality measurement being indicative on the IMSI3.

3. Device according to any previous claim, wherein, for sending, to the server, the message including the second IP address, as the currently active IP address of the device, and the first IP address, as the previously active IP address of the device, the modem manager is configured to send, to the server, once the second modem has switched to the active mode, the message including the second IP address, as the currently active IP address of the device, associated with a Temporary IMSI2, T-IMSI2 and the first IP address, as the previously active IP address of the device, associated with a T-IMSI1, wherein the T-IMSI2 and the T-IMSI1 are related to the respective IMSI2 and IMSI1.

4. Device according to any previous claim, wherein the modem manager is executed by a processor either included in the first modem or one of the at least one second modem or separate from the first modem and the at least one second modem.

5. Device according to any previous claim, wherein the at least one second service quality measurement and the first service quality measurement include, each, at least one element of a group including:
- a Received Signal Strength Indication;
- a Received Signal Code Power;
- a Reference Signal Received Quality;
- a latency;
- a bandwidth;
- a Signal-to-Noise Ratio;
- a Bit Error Rate; and
- a Block Error Rate.

6. A chip (12) for maintaining a connection through at least one wireless network (14 or 16) to a server (110), the chip comprising or being connected to a first modem (122) and at least one second modem (124), each of the first modem and the at least one second modem comprising data storing means (122m or 124m), each of the data storing means storing at least one International Mobile Subscriber Identity, IMSI, each of the first modem and the at least one
second modem having an active mode and an inactive mode, the first modem being initially in the active mode and being included in a first data path between the chip and the server, the at least one second modem being initially in the inactive mode, the chip comprising a modem manager (200), the modem manager is configured to:
- receive (210), from the first modem, a first service quality measurement on a used IMSI1, the IMSI1 being associated with a first IP address;
- receive (212), from the at least one second modem, at least one second service quality measurement being indicative on a IMSI2, the IMSI2 being associated with a second IP address;
- determine (214), based on the at least one second service quality measurement and the first service quality measurement, the best service quality measurement;
- send (216), to the second modem, only if the second service quality measurement is greater than or equal to the first service quality measurement, a command for switching from the inactive mode to the active mode;
- send (218), to the server, once the second modem has switched to the active mode, a message including the second IP address, as a currently active IP address of the chip, and the first IP address, as a previously active IP address of the chip;
- route (220), only if the second service quality measurement is greater than or equal to the first service quality measurement, data from the first to the second modem, the IMSI2 substituting the IMSI1 at the chip, the second modem being included in a second data path between the chip and the server; and
- send (222), to the first modem, only if the second service quality measurement is greater than or equal to the first service quality measurement, a command for switching from the active mode to the inactive mode
said chip storing secret shared with the server, the modem manager is further configured to send, to the server, data in an encrypted manner while using the shared secret and/or to receive from the server data in an encrypted manner while using the shared secret.

7. A system comprising at least one device (10) and at least one chip (12), the at least one device includes a device according to any of claims 1 to 5 or the at least one chip includes a chip according to claim 6.

8. System according to claim 7, wherein the at least one device includes at least one element of a group including a drone, a vehicle, a mobile phone, a media-player, a game console, a laptop computer, a tablet, a desktop computer, a set-up box, a netbook, a Personal Digital Assistance, a Machine To Machine, an Internet of Things, a Personal Computer and any computing device.

9. A method (20) for maintaining a connection through at least one wireless network between a device (10) and a server (110), the device (10) comprising a first modem (122) and at least one second modem (124), each of the first modem and the at least one second modem comprising data storing means (122m or 124m), each of the data storing means storing at least one International Mobile Subscriber Identity, IMSI, each of the first modem and the at least one
second modem having an active mode and an inactive mode, the first modem being initially in the active mode (22) and being included in a first data path between the device and the server, the at least one second modem being initially in the inactive mode (24), the device comprising a modem manager (200), the method comprising:
- receiving (210), by the modem manager, from the first modem, a first service quality measurement on a used IMSI1, the IMSI1 being associated with a first IP address;
- receiving (212), by the modem manager, from the at least one second modem, at least one second service quality measurement being indicative on a IMSI2, the IMSI2 being associated with a second IP address;
- determining (214), by the modem manager, based on the at least one second service quality measurement and the first service quality measurement, the best service quality measurement;
- sending (216), by the modem manager, to the second modem, only if the second service quality measurement is greater than or equal to the first service quality measurement, a command for switching from the inactive mode to the active mode;
- sending (218), to the server, once the second modem has switched to the active mode, a message including the second IP address, as a currently active IP address of the device, and the first IP address, as a previously active IP address of the device;
- routing (220), by the modem manager, only if the second service quality measurement is greater than or equal to the first service quality measurement, data from the first to the second modem, the IMSI2 substituting the IMSI1 at the device, the second modem being included in a second data path between the device and the server; and
- sending (222), by the modem manager, to the first modem, only if the second service quality measurement is greater than or equal to the first service quality measurement, a command for switching from the active mode to the inactive mode,
- the method further comprising, the server and the device storing a shared secret, the step for the device to send, to the server, data in an encrypted manner while using the shared secret and/or the step, for the server, to send, to the device, data in an encrypted manner while using the shared secret.

## Patentansprüche

1. Vorrichtung (10) zum Aufrechterhalten einer Verbindung durch mindestens ein drahtloses Netzwerk (14 oder 16) zu einem Server (110), die Vorrichtung umfassend ein erstes Modem (122) und mindestens ein zweites Modem (124), jedes des ersten Modems und des mindestens einen zweiten Modems umfassend Datenspeichermittel (122 m oder 124m), wobei jedes der Datenspeichermittel mindestens eine internationale Mobilteilnehmerkennung, IMSI, speichert, jedes des ersten Modems und des mindestens einen zweiten Modems einen aktiven Modus und einen inaktiven Modus aufweist, das erste Modem anfänglich in dem aktiven Modus ist und in einem ersten Datenweg zwischen der Vorrichtung und dem Server eingeschlossen ist, das mindestens eine zweite Modem anfänglich in dem inaktiven Modus ist, die Vorrichtung umfassend einen Modemmanager (200), wobei der Modemmanager konfiguriert ist zum:
- Empfangen (210), von dem ersten Modem, einer ersten Dienstgütemessung auf einer verwendeten IMSI1, wobei die IMSI1 einer ersten IP-Adresse zugeordnet ist;
- Empfangen (212), von dem mindestens einen zweiten Modem, mindestens einer zweiten Dienstgütemessung, die auf eine IMSI2 hinweist, wobei die IMSI2 einer zweiten IP-Adresse zugeordnet ist;
- Bestimmen (214), basierend auf der mindestens einen zweiten Dienstgütemessung und der ersten Dienstgütemessung, der besten Dienstgütemessung;
- Senden (216), an das zweite Modem, nur wenn die zweite Dienstgütemessung größer als oder gleich der ersten Dienstgütemessung ist, eines Befehls zum Umschalten von dem inaktiven Modus in den aktiven Modus;
- Senden (218), an den Server, sobald das zweite Modem in den aktiven Modus umgeschaltet hat, einer Nachricht, die die zweite IP-Adresse als eine aktuell aktive IP-Adresse der Vorrichtung und die erste IP-Adresse als eine zuvor aktive IP-Adresse der Vorrichtung einschließt;
- Leiten (220), nur wenn die zweite Dienstgütemessung größer als oder gleich der ersten Dienstgütemessung ist, von Daten von dem ersten zu dem zweiten Modem, wobei die IMSI2 die IMSI1 an der Vorrichtung ersetzt, wobei das zweite Modem in einem zweiten Datenweg zwischen der Vorrichtung und dem Server eingeschlossen ist; und
- Senden (222), an das erste Modem, nur wenn die zweite Dienstgütemessung größer als oder gleich der ersten Dienstgütemessung ist, eines Befehls zum Umschalten von dem aktiven Modus in den inaktiven Modus,
wobei die Vorrichtung ein mit dem Server gemeinsames Geheimnis speichert, wobei der Modemmanager ferner konfiguriert ist, um Daten auf eine verschlüsselte Weise an den Server zu senden, während das geteilte Geheimnis verwendet wird und/oder Daten auf eine verschlüsselte Weise von dem Server zu empfangen, während das gemeinsame Geheimnis verwendet wird.

2. Vorrichtung nach Anspruch 1, wobei der Modemmanager ferner konfiguriert ist, um, sobald das zweite Modem aktiviert wurde einen Befehl zum Umschalten von der IMSI1 zu einer IMSI3 an das erste Modem zu senden und mindestens eine dritte Dienstgütemessung durchzuführen, die auf die IMSI3 hinweist.

3. Vorrichtung nach einem der vorstehenden Ansprüche, wobei zum Senden an den Server der Nachricht, die die zweite IP-Adresse als die aktuell aktive IP-Adresse der Vorrichtung und die erste IP-Adresse als die zuvor aktive IP-Adresse der Vorrichtung einschließt, der Modemmanager konfiguriert ist, um, sobald das zweite Modem in den aktiven Modus umgeschaltet hat, die Nachricht an den Server zu senden, die die zweite IP-Adresse als die aktuell aktive IP-Adresse der Vorrichtung, die einem temporären IMSI2, T-IMSI2, zugeordnet ist, und die erste IP-Adresse als die zuvor aktive IP-Adresse der Vorrichtung, die einer T-IMSI1 zugeordnet ist, einschließt, wobei sich die T-IMSI2 und die T-IMSI1 auf die jeweilige IMSI2 und IMSI1 beziehen.

4. Vorrichtung nach einem der vorstehenden Ansprüche, wobei der Modemmanager durch einen Prozessor ausgeführt wird, der entweder in dem ersten Modem oder einem des mindestens einen zweiten Modems eingeschlossen oder von dem ersten Modem und dem mindestens einen zweiten Modem getrennt ist.

5. Vorrichtung nach einem der vorstehenden Ansprüche, wobei die mindestens eine zweite Dienstgütemessung und die erste Dienstgütemessung jeweils mindestens ein Element einer Gruppe einschließen, die einschließt:
- eine empfangene Signalstärkeangabe;
- eine empfangenen Signalcodeleistung;
- eine Referenzsignalempfangsqualität;
- eine Latenz;
- eine Bandbreite;
- ein Signal-Rausch-Verhältnis;
- eine Bitfehlerrate; und
- eine Blockfehlerrate.

6. Chip (12) zum Aufrechterhalten einer Verbindung durch mindestens ein drahtloses Netzwerk (14 oder 16) zu einem Server (110), der Chip umfassend oder verbunden mit einem ersten Modem (122) und mindestens einem zweiten Modem (124), jedes des ersten Modems und des mindestens einen zweiten Modems umfassend Datenspeichermittel (122 m oder 124m), wobei jedes der Datenspeichermittel mindestens eine internationale Mobilteilnehmerkennung, IMSI, speichert, jedes des ersten Modems und des mindestens einen zweiten Modems einen aktiven Modus und einen inaktiven Modus aufweist, das erste Modem anfänglich in dem aktiven Modus ist und in einem ersten Datenweg zwischen dem Chip und dem Server eingeschlossen ist, das mindestens eine zweite Modem anfänglich in dem inaktiven Modus ist, der Chip umfassend einen Modemmanager (200), wobei der Modemmanager konfiguriert ist zum:
- Empfangen (210), von dem ersten Modem, einer ersten Dienstgütemessung auf einer verwendeten IMSI1, wobei die IMSI1 einer ersten IP-Adresse zugeordnet ist;
- Empfangen (212), von dem mindestens einen zweiten Modem, mindestens einer zweiten Dienstgütemessung, die auf eine IMSI2 hinweist, wobei die IMSI2 einer zweiten IP-Adresse zugeordnet ist;
- Bestimmen (214), basierend auf der mindestens einen zweiten Dienstgütemessung und der ersten Dienstgütemessung, der besten Dienstgütemessung;
- Senden (216), an das zweite Modem, nur wenn die zweite Dienstgütemessung größer als oder gleich der ersten Dienstgütemessung ist, eines Befehls zum Umschalten von dem inaktiven Modus in den aktiven Modus;
- Senden (218), an den Server, sobald das zweite Modem in den aktiven Modus umgeschaltet hat, einer Nachricht, die die zweite IP-Adresse als eine aktuell aktive IP-Adresse des Chips und die erste IP-Adresse als eine zuvor aktive IP-Adresse des Chips einschließt;
- Leiten (220), nur wenn die zweite Dienstgütemessung größer als oder gleich der ersten Dienstgütemessung ist, von Daten von dem ersten zu dem zweiten Modem, wobei die IMSI2 die IMSI1 an dem Chip ersetzt, wobei das zweite Modem in einem zweiten Datenweg zwischen dem Chip und dem Server eingeschlossen ist; und
- Senden (222), an das erste Modem, nur wenn die zweite Dienstgütemessung größer als oder gleich der ersten Dienstgütemessung ist, eines Befehls zum Umschalten von dem aktiven Modus in den inaktiven Modus
wobei der Chip das mit dem Server gemeinsame Geheimnis speichert, wobei der Modemmanager ferner konfiguriert ist, um Daten auf eine verschlüsselte Weise an den Server zu senden, während das geteilte Geheimnis verwendet wird und/oder Daten auf eine verschlüsselte Weise von dem Server zu empfangen, während das gemeinsame Geheimnis verwendet wird.

7. System, umfassend mindestens eine Vorrichtung (10) und mindestens einen Chip (12), wobei die mindestens eine Vorrichtung eine Vorrichtung nach einem der Ansprüche 1 bis 5 einschließt oder der mindestens eine Chip einen Chip nach Anspruch 6 einschließt.

8. System nach Anspruch 7, wobei die mindestens eine Vorrichtung mindestens ein Element einer Gruppe einschließt, die eine Drohne, ein Fahrzeug, ein Mobiltelefon, ein Medienwiedergabegerät, eine Spielkonsole, einen Laptop-Computer, ein Tablet, einen Desktop-Computer, eine Setup-Box, ein Netbook, eine persönliche digitale Assistenz, eine Maschine zu Maschine, ein Internet der Dinge, einen Personal Computer und eine beliebige Rechenvorrichtung einschließt.

9. Verfahren (20) zum Aufrechterhalten einer Verbindung durch mindestens ein drahtloses Netzwerk zwischen einer Vorrichtung (10) und einem Server (110), die Vorrichtung (10) umfassend ein erstes Modem (122) und mindestens ein zweites Modem (124), jedes des ersten Modems und des mindestens einen zweiten Modems umfassend Datenspeichermittel (122m oder 124m), wobei jedes der Datenspeichermittel mindestens eine internationale Mobilteilnehmerkennung, IMSI, speichert, jedes des ersten Modems und des mindestens einen zweiten Modems einen aktiven Modus und einen inaktiven Modus aufweist, das erste Modem anfänglich in dem aktiven Modus (22) ist und in einem ersten Datenweg zwischen der Vorrichtung und dem Server eingeschlossen ist, das mindestens eine zweite Modem anfänglich in dem inaktiven Modus (24) ist, die Vorrichtung umfassend einen Modemmanager (200), das Verfahren umfassend:
- Empfangen (210), durch den Modemmanager, von dem ersten Modem, einer ersten Dienstgütemessung an einer verwendeten IMSI1, wobei die IMSI1 einer ersten IP-Adresse zugeordnet ist;
- Empfangen (212), durch den Modemmanager, von dem mindestens einen zweiten Modem, mindestens einer zweiten Dienstgütemessung, die auf eine IMSI2 hinweist, wobei die IMSI2 einer zweiten IP-Adresse zugeordnet ist;
- Bestimmen (214), durch den Modemmanager, basierend auf der mindestens einen zweiten Dienstgütemessung und der ersten Dienstgütemessung, der besten Dienstgütemessung;
- Senden (216), durch den Modemmanager, an das zweite Modem, nur wenn die zweite Dienstgütemessung größer als oder gleich der ersten Dienstgütemessung ist, eines Befehls zum Umschalten von dem inaktiven Modus in den aktiven Modus;
- Senden (218), an den Server, sobald das zweite Modem in den aktiven Modus umgeschaltet hat, einer Nachricht, die die zweite IP-Adresse als eine aktuell aktive IP-Adresse der Vorrichtung und die erste IP-Adresse als eine zuvor aktive IP-Adresse der Vorrichtung einschließt;
- Leiten (220), durch den Modemmanager, nur wenn die zweite Dienstgütemessung größer als oder gleich der ersten Dienstgütemessung ist, von Daten von dem ersten zu dem zweiten Modem, wobei die IMSI2 die IMSI1 an der Vorrichtung ersetzt, wobei das zweite Modem in einem zweiten Datenweg zwischen der Vorrichtung und dem Server eingeschlossen ist; und
- Senden (222), durch den Modemmanager, an das erste Modem, nur wenn die zweite Dienstgütemessung größer als oder gleich der ersten Dienstgütemessung ist, eines Befehls zum Umschalten von dem aktiven Modus in den inaktiven Modus,
- das Verfahren ferner umfassend, dass der Server und die Vorrichtung, die ein gemeinsames Geheimnis speichern, den Schritt für die Vorrichtung, um Daten auf eine verschlüsselte Weise an den Server zu senden, während das gemeinsame Geheimnis verwendet wird und/oder den Schritt für den Server, um Daten auf eine verschlüsselte Weise an die Vorrichtung senden, während das gemeinsame Geheimnis verwendet wird.

## Revendications

1. Dispositif (10) destiné à maintenir une connexion à travers au moins un réseau sans fil (14 ou 16) à un serveur (110), le dispositif comprenant un premier modem (122) et au moins un second modem (124), chacun parmi le premier modem et l'au moins un second modem comprenant un moyen de stockage de données (122 m ou 124m), chacun des moyens de stockage de données stockant au moins une identité internationale d'abonné mobile, IMSI, chacun parmi le premier modem et l'au moins un second modem présentant un mode actif et un mode inactif, le premier modem étant initialement dans le mode actif et étant inclus dans un premier chemin de données entre le dispositif et le serveur, l'au moins un second modem étant initialement dans le mode inactif, le dispositif comprenant un gestionnaire de modem (200), le gestionnaire de modem est configuré pour :
- recevoir (210), depuis le premier modem, une première mesure de qualité de service sur une IMS11 utilisée, l'IMS11 étant associée à une première adresse IP ;
- recevoir (212), depuis l'au moins un second modem, au moins une deuxième mesure de qualité de service qui est indicative sur une IMSI2, l'IMS12 étant associée à une seconde adresse IP ;
- déterminer (214), sur la base de l'au moins une deuxième mesure de qualité de service et de la première mesure de qualité de service, la meilleure mesure de qualité de service ;
- envoyer (216), au second modem, uniquement si la deuxième mesure de qualité de service est supérieure ou égale à la première mesure de qualité de service, une commande pour commuter du mode inactif au mode actif ;
- envoyer (218), au serveur, une fois que le second modem a commuté en mode actif, un message comportant la seconde adresse IP, en tant qu'adresse IP actuellement active du dispositif, et la première adresse IP, en tant qu'adresse IP précédemment active du dispositif ;
- acheminer (220), uniquement si la deuxième mesure de qualité de service est supérieure ou égale à la première mesure de qualité de service, des données du premier au second modem, l'IMSI2 remplaçant l'IMSI1 au niveau du dispositif, le second modem étant inclus dans un second chemin de données entre le dispositif et le serveur ; et
- envoyer (222), au premier modem, uniquement si la deuxième mesure de qualité de service est supérieure ou égale à la première mesure de qualité de service, une commande pour commuter du mode actif au mode inactif,
ledit dispositif stockant un secret partagé avec le serveur, le gestionnaire de modem étant en outre configuré pour envoyer, au serveur, des données de manière cryptée tout en utilisant le secret partagé et/ou pour recevoir, depuis le serveur, des données de manière cryptée tout en utilisant le secret partagé.

2. Dispositif selon la revendication 1, dans lequel le gestionnaire de modem est en outre configuré pour envoyer, une fois que le second modem a été activé, au premier modem, une commande pour commuter de l'IMSI1 à une IMSI3 et pour effectuer au moins une troisième mesure de qualité de service qui est indicative sur l'IMSI3.

3. Dispositif selon l'une quelconque revendication précédente, dans lequel, pour l'envoi, au serveur, du message comportant la seconde adresse IP, en tant qu'adresse IP actuellement active du dispositif, et la première adresse IP, en tant qu'adresse IP précédemment active du dispositif, le gestionnaire de modem est configuré pour envoyer, au serveur, une fois que le second modem a commuté en mode actif, le message comportant la seconde adresse IP, en tant qu'adresse IP actuellement active du dispositif, associée à une IMSI2 temporaire, T-IMSI2 et la première adresse IP, en tant qu'adresse IP précédemment active du dispositif, associée à une T-IMSI1, dans lequel T-IMSI2 et T-IMS1 sont liées aux IMSI2 et IMSI1 respectives.

4. Dispositif selon l'une quelconque revendication précédente, dans lequel le gestionnaire de modem est exécuté par un processeur, soit inclus dans le premier modem ou dans l'un parmi l'au moins un second modem, soit distinct du premier modem et de l'au moins un second modem.

5. Dispositif selon l'une quelconque revendication précédente, dans lequel l'au moins une deuxième mesure de qualité de service et la première mesure de qualité de service comportent, chacune, au moins un élément d'un groupe comportant ;
- une indication d'intensité du signal reçu ;
- une puissance de code de signal reçu ;
- une qualité de réception de signal de référence ;
- une latence ;
- une largeur de bande ;
- un rapport signal sur bruit ;
- un taux d'erreur sur les bits ; et
- un taux d'erreur sur les blocs.

6. Puce (12) destinée à maintenir une connexion à travers au moins un réseau sans fil (14 ou 16) à un serveur (110), la puce comprenant un premier modem (122) et au moins un second modem (124) ou étant connectée à un premier modem (122) et à au moins un second modem (124), chacun parmi le premier modem et l'au moins un second modem comprenant un moyen de stockage de données (122 m ou 124m), chacun des moyens de stockage de données stockant au moins une identité internationale d'abonné mobile, IMSI, chacun parmi le premier modem et l'au moins un second modem présentant un mode actif et un mode inactif, le premier modem étant initialement dans le mode actif et étant inclus dans un premier chemin de données entre la puce et le serveur, l'au moins un second modem étant initialement dans le mode inactif, la puce comprenant un gestionnaire de modem (200), le gestionnaire de modem est configuré pour :
- recevoir (210), depuis le premier modem, une première mesure de qualité de service sur une IMS11 utilisée, l'IMS11 étant associée à une première adresse IP ;
- recevoir (212), depuis l'au moins un second modem, au moins une deuxième mesure de qualité de service qui est indicative sur une IMSI2, l'IMS12 étant associée à une seconde adresse IP ;
- déterminer (214), sur la base de l'au moins une deuxième mesure de qualité de service et de la première mesure de qualité de service, la meilleure mesure de qualité de service ;
- envoyer (216), au second modem, uniquement si la deuxième mesure de qualité de service est supérieure ou égale à la première mesure de qualité de service, une commande pour commuter du mode inactif au mode actif ;
- envoyer (218), au serveur, une fois que le second modem a commuté en mode actif, un message comportant la seconde adresse IP, en tant qu'adresse IP actuellement active de la puce, et la première adresse IP, en tant qu'adresse IP précédemment active de la puce ;
- acheminer (220), uniquement si la deuxième mesure de qualité de service est supérieure ou égale à la première mesure de qualité de service, des données du premier au second modem, l'IMSI2 remplaçant l'IMSI1 au niveau de la puce, le second modem étant inclus dans un second chemin de données entre la puce et le serveur ; et
- envoyer (222), au premier modem, uniquement si la deuxième mesure de qualité de service est supérieure ou égale à la première mesure de qualité de service, une commande pour commuter du mode actif au mode inactif ;
ladite puce stockant un secret partagé avec le serveur, le gestionnaire de modem étant en outre configuré pour envoyer, au serveur, des données de manière cryptée tout en utilisant le secret partagé et/ou pour recevoir, depuis le serveur, des données de manière cryptée tout en utilisant le secret partagé.

7. Système comprenant au moins un dispositif (10) et au moins une puce (12), l'au moins un dispositif comporte un dispositif selon l'une quelconque des revendications 1 à 5 ou l'au moins une puce comporte une puce selon la revendication 6.

8. Système selon la revendication 7, dans lequel l'au moins un dispositif comporte au moins un élément d'un groupe comportant un drone, un véhicule, un téléphone mobile, un lecteur multimédia, une console de jeu, un ordinateur portable, une tablette, un ordinateur de bureau, une boîte d'installation, un miniportable, un assistant numérique personnel, une machine à machine, un Internet des Objets, un ordinateur personnel et tout dispositif informatique.

9. Procédé (20) destiné à maintenir une connexion à travers au moins un réseau sans fil entre un dispositif (10) et un serveur (110), le dispositif (10) comprenant un premier modem (122) et au moins un second modem (124), chacun parmi le premier modem et l'au moins un second modem comprenant un moyen de stockage de données (122 m ou 124m), chacun des moyens de stockage de données stockant au moins une identité internationale d'abonné mobile, IMSI, chacun parmi le premier modem et l'au moins un second modem présentant un mode actif et un mode inactif, le premier modem étant initialement dans le mode actif (22) et étant inclus dans un premier chemin de données entre le dispositif et le serveur, l'au moins un second modem étant initialement dans le mode inactif (24), le dispositif comprenant un gestionnaire de modem (200), le procédé consistant à :
- recevoir (210), par le gestionnaire de modem, depuis le premier modem, une première mesure de qualité de service sur une IMSI utilisée, l'IMSI1 étant associée à une première adresse IP ;
- recevoir (212), par le gestionnaire de modem, depuis l'au moins un second modem, au moins une deuxième mesure de qualité de service qui est indicative sur une IMSI2, l'IMSI2 étant associée à une seconde adresse IP ;
- déterminer (214), par le gestionnaire de modem, sur la base de l'au moins une deuxième mesure de qualité de service et de la première mesure de qualité de service, la meilleure mesure de qualité de service ;
- envoyer (216), par le gestionnaire de modem, au second modem, uniquement si la deuxième mesure de qualité de service est supérieure ou égale à la première mesure de qualité de service, une commande pour commuter du mode inactif au mode actif ;
- envoyer (218), au serveur, une fois que le second modem a commuté en mode actif, un message comportant la seconde adresse IP, en tant qu'adresse IP actuellement active du dispositif, et la première adresse IP, en tant qu'adresse IP précédemment active du dispositif ;
- acheminer (220), par le gestionnaire de modem, uniquement si la deuxième mesure de qualité de service est supérieure ou égale à la première mesure de qualité de service, des données du premier au second modem, l'IMSI2 remplaçant l'IMSI1 au niveau du dispositif, le second modem étant inclus dans un second chemin de données entre le dispositif et le serveur ; et
- envoyer (222), par le gestionnaire de modem, au premier modem, uniquement si la deuxième mesure de qualité de service est supérieure ou égale à la première mesure de qualité de service, une commande pour commuter du mode actif au mode inactif,
- le procédé comprenant en outre, le serveur et le dispositif stockant un secret partagé, l'étape, pour le dispositif, consistant à envoyer, au serveur, des données de manière cryptée tout en utilisant le secret partagé et/ou l'étape, pour le serveur, consistant à envoyer, au dispositif, des données de manière cryptée tout en utilisant le secret partagé.
